# EUROPÄISCHE PATENTSCHRIFT

(11) **EP 2 944 186 B1**
(45) Veröffentlichungstag und Bekanntmachung des Hinweises auf die Patenterteilung: **08.03.2017**
(21) Anmeldenummer: 15001443.9
(22) Anmeldetag: 13.05.2015
(51) Int. Cl.: A01G 1/06, A01G 17/06

(54) **HERSTELLUNGSVERFAHREN FÜR OBSTBÄUME MIT HORIZONTALEM LEITAST**
MANUFACTURING METHOD FOR FRUIT TREES WITH HORIZONTAL LEADER BRANCH
PROCÉDÉ DE PRODUCTION D'ARBRES FRUITIERS À BRANCHES CHARPENTIÈRES HORIZONTALES

(30) Priorität: 15.05.2014 IT BZ20140022
(43) Veröffentlichungstag der Anmeldung: 18.11.2015
(73) Patentinhaber: Vorhauser, Christian, 39040 Margreid (BZ) (IT); Vivai Daniele di Daniele Nicola, 35020 Saonara (PD) (IT)
(72) Erfinder: Vorhauser, Christian, I- 39040 Margreid (BZ) (IT); Daniele, Nicola, I-35020 Saonara (PD) (IT)
(74) Vertreter: Oberosler, Ludwig

(56) Entgegenhaltungen:
- EP-A1- 2 548 433
- WO-A2-2008/047297
- CA-A1- 2 509 278
- FR-A1- 2 799 931
- NL-C2- 1 002 416
- US-A- 4 333 266
- US-B1- 7 818 915

## Beschreibung

Die Erfindung betrifft ein Herstellungsverfahren von Vermehrungsmaterial für Pflanzen, zwecks Anbau, insbesondere für Apfel- oder Birnbäume von der Art mit einem horizontalem Leitast, ohne Ausschluss des Herstellungsverfahrens für andere Obstbäume.

Aus der Patentanmeldung WO2008047297 ist eine "Methode zur Herstellung von Vermehrungsmaterial für Baumanlagen mit Bäumen vom Typ mit zwei Leitästen" bekannt welches folgende Arbeitsphasen umfasst:
- Umpflanzen und Kultur einer Unterlage in Kulturland,
- Aufpfropfen von Vermehrungsmaterial der zu vermehrenden Sorte auf die Unterlage zwecks Heranziehen von Knospen,
- Selektion und/oder Verändern der Position der besagten Knospen um an jeder Pflanze zwei Knospen in gegenüberliegender Position zu erhalten und
- Heranzucht der besagten Pflanzen bis in das Stadium ihrer Pflanzung für die Obstproduktion.

Die durch diese Methode hergestellten Pflanzen mit zwei Leitästen sind durch zwei symmetrische, vertikal herangezogene Triebe gekennzeichnet welche mit Fruchtrieben an den Leitästen ausgestattet sind. Diese Art der Zucht ermöglicht eine Reduzierung der Baumschnitt-, der Biege- und Positionierungsarbeiten; sie bewirkt eine Reduktion der Wuchskraft der Pflanze, eine bessere Sonnenbestrahlung der Früchte und eine Verminderung der vertikalen Schösslinge (Geiztriebe) welche die Anregung zur Blüte vermindern und entfernt werden müssen. Die durch die vorgeschlagene Methode hergestellten Pflanzen weisen den Nachteil auf, dass die Wuchskraft an den einzelnen Leitästen oft sehr unterschiedlich ist was, außer von den vegetativen inneren Merkmale der beiden Triebe, auch von der Position, von der Ausrichtung zur Sonne und vor allem von der Baumschnittmethode abhängt. Das Gleichgewicht zwischen den beiden Leitästen der Pflanze kann nur dadurch das Einschreiten eines Experten beibehalten werden, welcher in der Lage ist die Wuchskraft an den zwei Trieben, bzw. Leitästen, zu bewerten um den Schnitt an den Trieben, bzw. an den Leitästen, in Abhängigkeit der zu dämmenden oder anzuregenden Wuchskraft, auszuführen.

Aus der US 4,333,266 ist ein Verfahren für das maschinelle Schneiden und Bearbeiten von Reben bekannt. Um den Einsatz der erfindungsgemäßen Maschine zu ermöglichen sind die Reben mit einem Leitast herangezogen welcher zur Unterlage eine Position von ca. 90° einnimmt. Auf diesem einzelnen Leitast wachsen mehrere Triebe welche untereinander ungefähr gleich beabstandet sind und welche in Richtung Boden hängen um so einfach von der durchfahrenden erfindungsgemäßen Maschine bearbeitet zu werden. Diese Art des Anbaues ist für Obstbäume nicht geeignet weil in diesem Fall die Triebe nicht hängend wachsen dürfen sondern in wesentlich aufrechter Position gezogen werden um an Drähten, welche in Längsrichtung der Baumreihe verlaufen, angebunden werden zu können.

Aus der CA 2509278 ist ein Verfahren bekannt um Reben und andere kälteempfindliche Pflanzen zu schützen indem Wärmequellen, z.B. elektrische Heizkabel, an den fruchttragenden horizontalen Leitästen installiert werden. Zwecks bequemerer Anbringung dieses Systems sind die beiden, sich in Gegenrichtung erstreckenden, Leittriebe an einem horizontal gespannten Draht angebunden. Diese Anordnung der Leittriebe ist für den Anbau von Weinreben bekannt.

Die Erfindung stellt sich die Aufgabe ein Herstellungsverfahren für Obstbäume zu schaffen durch welches die Zeit bis zum Fruchtansatz verkürzt wird, die Bedingungen für die Mechanisierung verbessert werden und die Bestrahlung der Früchte und Blätter durch die Sonne verbessert wird um die Fruchtqualität zu steigern und die Erntezeiten, sowie die Anzahl der Ernteeingriffe, zu vermindern.

Zur Lösung dieser Aufgabe schlägt die Erfindung die Herstellung von Bäumen vom Typ mit einem einzigen horizontalen Leitast vor von welchem sich vier vertikale, untereinander beabstandete, Triebe erstrecken um eine vorwiegend in der Breite entwickelte Baumkrone zu erreichen, während deren Entwicklung in Tiefenrichtung bescheiden ist. Erfindungsgemäß umfasst das Herstellungsverfahren von Bäumen mit den obgenannten Merkmalen folgende, in der Baumschule vorgenommene, Arbeitsfasen:
- Aufpfropfen eines Auges der herzustellenden Sorte auf eine Unterlage (Februar/März) und anschließendes Auspflanzen und verschulen in der Baumschule wodurch für den Herbst des selben Jahres ein astloses einjähriges Bäumchen mit ca. 1,70 m Höhe erzeugt wird;
- Biegen des auf ca. 1m beschnittenen astlosen einjährigen Bäumchens in horizontale Richtung und Binden an einen, ca. 70 cm vom Boden entfernten, horizontal gespannten Draht (Beginn des zweiten Jahres in der Baumschule), zwecks Bildung eines horizontalen Leitastes;
- Schneiden der Triebe und Beseitigen der Knospen im Bereich des Buges am Beginn des horizontalen Leitastes sowie der dazwischen liegenden Triebe um vier vertikale Fruchttriebe zu belassen welche zueinander möglichst gleichen Abstand (ca. 25cm) haben (Sommer des zweiten Jahres);
- Binden der vier vertikalen Fruchttriebe an einen, ca. 1,40m vom Boden beabstandeten, gespannten Draht.

Am darauf folgenden Jahr sind die Bäume bereit um in die Anlage gepflanzt zu werden wo eine Stützstruktur, bestehend aus Pfählen und horizontalen Drähten, vorgesehen ist, an den vier vertikalen Fruchttrieben werden die ersten fruchtbringenden Blütenknospen austreiben. Der folgende Erziehungsschnitt und der Schnitt zwecks Förderung des Fruchtansatzes erfolgt auf bekannte Art, wobei ein beschränktes Einkürzen der vertikalen Fruchttriebe eine leichte Anregung des Wuchses in vertikaler Richtung und die Ausbildung von Knospen und kleinen seitlichen Fruchttrieben am älteren Holz bewirkt. Mindestens bis zum Erreichen der gewünschten, von der Stützstruktur, von der Hagelschutzstruktur und von den motorisierten Maschinen für den Baumschnitt, dem Binden, dem Ausdünnen, der Ernte und den Behandlungen, vorgegebenen, maximalen Höhe (ca. 3,30m) der Bäume, werden die vertikalen Fruchttriebe so beschnitten werden, dass der Wuchs gedämmt wird und das Wachsen neuer seitlicher Fruchttriebe angeregt wird um die Produktion von Früchten zu erhöhen. Später hingegen erfahren hingegen die von den vertikalen Fruchttrieben sich abzweigenden Triebe eine Beschneidung welche eine gute Verteilung der kleinen Fruchtästchen begünstigt so dass eine gute Sonnenbescheinung erfolgen kann und die Früchte möglichst gleiche Größe und gute Ausfärbung auch an den tiefliegenden Fruchtästen aufweisen, so dass die Pflückgänge reduziert werden können. Weiters ermöglicht das besagte System eine beachtliche Verminderung der Abtrift der ausgebrachten Pflanzenschutzmittel. Die Höhenanordnung der erfindungsgemäßen Bäume ermöglicht, dass die Ernte zum Großteil ohne Hilfe von Plattformen erfolgen kann.

Die Erfindung wird anhand eines, in der beigelegten Zeichnung schematisch dargestellten, Ausführungsbeispieles des erfindungsgemäßen Herstellungsverfahrens für Obstbäume von der Art mit einem einzigen horizontalen Leitast näher erklärt, dabei erfüllt die Zeichnung rein erklärenden, nicht begrenzenden Zweck.
Die Fig. 1 zeigt in Seitenansicht eine Unterlage mit aufgepfropftem Auge der zu vermehrenden Sorte zwecks Erzeugung von Trieben.
Die Fig. 2 zeigt in Seitenansicht ein astloses, einjähriges Bäumchen bestehend aus der in Fig 1 dargestellten Unterlage mit vertikalem Trieb welcher während des ersten Anbaujahres gewachsen ist.
Die Fig. 3 zeigt in Seitenansicht das, in Fig. 2 dargestellte einjährige, astlose Bäumchen gebogen und an einen gespannten Draht gebunden um eine horizontale Position einzunehmen.
Die Fig. 4 zeigt in Seitenansicht das, in Fig. 3 dargestellte, gebogene einjährige Bäumchen an welchem sich mehrere vertikale Triebe ausgebildet haben von welchen einige herausgeschnitten worden sind, während vier davon verblieben sind und unter sich einen ungefähr gleichen Abstand einnehmen.

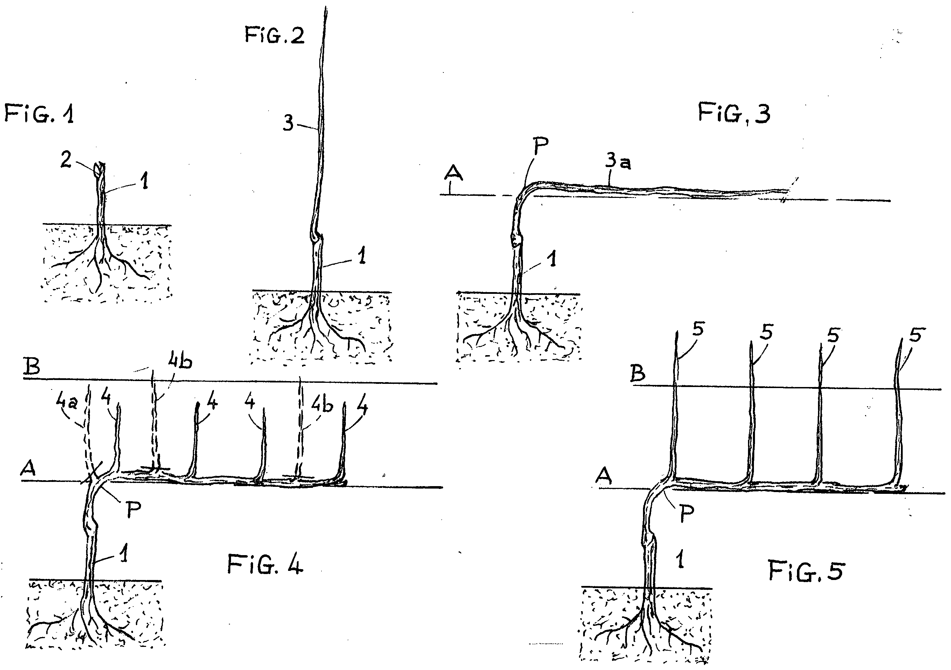

An einer Unterlage1, z.B. vom bekannten Typ M9, wird ein Auge 2 der Früchte tragenden, zu vermehrenden Sorte, mittels einer bekannten Veredlungsmethode, z.B. als "chip-Knospe", aufgepfropft um die Pflanze anschließend in eine Baumschule zu pflanzen (Februar, März) (Fig.1).

Diese Pflanze entwickelt sich während des Sommers des selben Jahres um ein astloses, einjähriges Bäumchen zu bilden welches eine Höhe von ca. 1,70m erreicht und aus der Unterlage 1 samt, aus dem Auge 2 gewachsenen vertikalen Trieb 3 besteht (Fig. 2).

Im Herbst des selben Jahres oder vorzugsweise im Februar/März des folgenden Jahres wird das astlose, einjährige Bäumchen, oberhalb der Veredelungsstelle um ca. 90° gebogen P und der Trieb 3a (Fig. 3) wird in horizontaler Position an einen Draht A gebunden welcher in einem Abstand von ca. 0,70m vom Boden gespannt ist. Der besagte horizontale Trieb wird den horizontalen Leitast der erzogenen Baumes bilden, insbesondere die Knospen welche sich an der Oberseite des besagten Leitastes 3a befinden, bilden während der Wachstumszeit, mehrere vertikale Triebe 4, 4a, 4b von denen die kräftigen Triebe 4a welche sich meistens im Bereich des Buges P befinden und die ebenfalls kräftigen Triebe 4b welche sich im Bereich des beschnittenen Endes des Leitastes 3a befinden, mit erhöhter Kraft wachsen werden weil in den besagten Bereichen ein Saftstau stattfindet. Die kräftigen Triebe 4a nahe dem Bug P und jene nahe dem Ende des Leitastes 3a, zusammen mit manchem Trieb in Zwischenposition werden herausgeschnitten so dass ein horizontaler Leitast mit vier vertikalen ungefähr gleich, ca. 0,25m, beabstandten vertikalen Trieben 4 erhalten wird. Diese besagten vertikalen Triebe 4 wachsen bereits im ersten Jahr als Fruchttriebe 5 (Fig. 5) so heran, dass sich an ihnen einige Fruchtknospen bilden und dass sie an einen ca. 1,40m über dem Boden gespannten Draht B gebunden werden können. Die so herangezogenen Bäume sind bereit um die Baumschule zu verlassen und in eine Anlage mit geeigneter Stützstruktur gepflanzt zu werden. Die besagte Stützstruktur besteht in einer ersten Phase in Reihen vertikaler Pfähle an welchen jeweils zwei horizontal gespannte Drähte A, B vorgesehen sind; die Praxis hat gezeigt, dass bereits im selben Jahr der Pflanzung der Bäume in der Anlage, eine bescheidene Ernte erfolgen kann.

Natürlich wird, während der gesamten Zeit der Heranzucht in der Baumschule, der gesamte horizontale Leitast 3a frei von Trieben oder Knospen gehalten welche in einer Zwischenposition zwischen den vertikalen Fruchttrieben 5, bzw. im Bereich des Buges P, wachsen würden.

Erfindungsgemäß können, im Fall wuchskräftiger Pflanzen, Sorten oder Unterlagen, die Pflanzen mit einem einzigen horizontalen Leitast (3a) mit mehr als 4 vertikalen Fruchttrieben (4, 5) herangezogen werden, während, im Fall weniger wuchskräftiger Pflanzen oder Sorten oder auf weniger wuchskräftigen Unterlagen (1), mit einem einzigen horizontalen Leitast (3a), dieser mit weniger als vier vertikalen Fruchttrieben (4, 5) herangezogen werden können.

Der Erziehungsschnitt und der Schnitt zwecks Anregung des Fruchtansatzes wird wesentlich so durchgeführt, dass sich eine Krone mit beachtlicher Breite, geringer Tiefe und mit, auf die Stützstruktur, die Hagelschutzstruktur und auf die, mittels der motorisierten Arbeitsgeräte, erreichbare Arbeitshöhe abgestimmte, Höhe entwickelt.

Der vorgeschlagene Reihenabstand in den Anlagen beträgt ungefähr 2,50m.

## Patentansprüche

1. Herstellungsverfahren für Obstbäume für Anlagen mit Stützstruktur, mit der Arbeitsphase:
- Aufpfropfen eines Auges (2) oder von Vermehrungsmaterial der zu vermehrenden Sorte auf eine Unterlage (1) und Pflanzen in die Baumschule am Beginn der ersten Wuchsperiode,
**gekennzeichnet durch** die folgenden Arbeitsphasen:
- Biegen um ca. 90° des Triebes (3) welcher sich leicht oberhalb der Veredlungsstelle in der selben Wuchsperiode gebildet hat und Anbinden an einem horizontal gespannten Draht (A) am Ende der ersten Wachstumsperiode oder im Frühjahr,
- Auswahl mit Schnitt der kräftigen Triebe (4a) im Bereich des Buges (P), im Bereich des Endes des horizontalen Leitastes (3a) und in den Zwischenbereichen um vier vertikale, unter sich ca. gleich beabstandete, Triebe (4), ca. zur Hälfte der zweiten Wachstumsperiode, zu erhalten,
- Binden der einzelnen Fruchttriebe (5) an einen horizontal gespannten Draht (B) mit Beseitigung eventueller, im Bereich des Buges (P) und längs des horizontalen Leitastes, in der Zwischenzeit gewachsener Triebe bis zum Ende der zweiten Wachtumsperiode,
- Auspflanzen in die Anlage am Anfang der Wachstumsperiode, wobei der horizontale Leitast (3a) an einem ersten unteren gespannten Draht (A) und die einzelnen vertikalen Triebe an einem zweiten oberen horizontalen Draht (B) festgebunden werden.

2. Herstellungsverfahren für Obstbäume gemäß Anspruch 1, **dadurch gekennzeichnet, dass** das Aufpfropfen eines Auges (2) oder von Vermehrungsmaterial der zu vermehrenden Sorte auf die Unterlage (1) durch Okulieren oder durch bekannte Veredelungssysteme erfolgt.

3. Herstellungsverfahren für Obstbäume gemäß Anspruch 1, **dadurch gekennzeichnet, dass** am horizontalen Leitast (3a) einer weniger wuchskräftigen Pflanze oder an einer auf einer schwachwüchsigere Unterlage (1) aufgepfropften Pflanze, weniger als vier vertikale, untereinander gleich beabstandete, Triebe (4, 5) herangezogen werden.

4. Herstellungsverfahren für Obstbäume gemäß Anspruch 1, **dadurch gekennzeichnet, dass** am horizontalen Leitast. (3a) einer wuchskräftigen Pflanze oder an einer auf einer wuchskräftigeren Unterlage (1) aufgepfropften Pflanze, mehr als vier vertikale, untereinander gleich beabstandete, Triebe (4, 5) herangezogen werden.

## Claims

1. A manufacturing method for fruit trees for installations having a supporting structure, said method comprising the working phase:
- grafting a bud (2) or propagating material of the variety to be propagated onto an understock (1) and planting in the tree nursery at the beginning of the first growing period,
**characterized by** the following working phases:
- bending through approximately 90° the shoot (3) that has formed slightly above the grafting point in the same growing period, and tying said shoot to a horizontally tensioned wire (A) at the end of the first growth period or in spring,
- culling by cutting off the vigorous shoots (4a) in the region of the bow (P), in the region of the end of the horizontal leader branch (3a) and in the intermediate regions so as to obtain four vertical shoots (4), located approximately equal distances apart, around halfway through the second growth period,
- tying the individual fruiting shoots (5) to a horizontally tensioned wire (B), eliminating any shoots that have grown in the interim in the region of the bow (P) and along the horizontal leader branch, by the end of the second growth period,
- planting out into the facility at the start of the growth period, the horizontal leader branch (3a) being tied to a first, lower tensioned wire (A) and the individual vertical shoots being tied to a second, upper horizontal wire (B).

2. The manufacturing method for fruit trees according to claim 1, **characterized in that** the grafting of a bud (2) or of propagating material of the variety to be propagated onto the understock (1) takes place by budding or by known grafting systems.

3. The manufacturing method for fruit trees according to claim 1, **characterized in that** less than four vertical shoots (4, 5), located at equal distances apart, are cultivated on the horizontal leader branch (3a) of a less vigorous plant or on a plant grafted onto a slower-growing understock (1).

4. The manufacturing method for fruit trees according to claim 1, **characterized in that** more than four vertical shoots (4, 5), located at equal distances apart, are cultivated on the horizontal leader branch (3a) of a vigorous plant or on a plant grafted onto a more vigorous understock (1).

## Revendications

1. Procédé de production d'arbres fruitiers pour installations à structure de support, comprenant les phases de travail suivantes :
- greffe d'un oeil (2) ou d'un matériau de multiplication de l'espèce devant être reproduite sur un porte-greffe (1) et plantes dans la pépinière au début de la première période de croissance,
- courbage à env. 90° du rameau (3) s'étant formé un peu au-dessus de la zone d'amélioration au cours de la même période de croissance et raccordement à un fil (A) tendu à l'horizontale à la fin de la première période de croissance ou au printemps,
- sélection et taille des rameaux robustes (4a) dans la zone avant (P), dans la zone arrière de la branche charpentière horizontale (3a) ainsi que dans les zones intermédiaires, en vue d'obtenir quatre rameaux (4) verticaux à une distance égale les uns des autres, environ à la moitié de la deuxième période de croissance,
- attachage des différents rameaux fruitiers (5) à un fil tendu à l'horizontale (B) avec élimination des rameaux ayant éventuellement poussés entre-temps dans la zone avant (P) et le long de la branche charpentière jusqu'à la fin de la deuxième période de croissance,
- transplantation dans l'installation au début de la période de croissance, la branche charpentière horizontale (3a) étant attachée à un premier fil tendu en bas (A), et les différents rameaux verticaux étant attachés à un deuxième fil horizontal tendu plus haut (B).

2. Procédé de production d'arbres fruitiers selon la revendication
1, **caractérisé en ce que** la greffe d'un oeil (2) ou d'un matériau de multiplication de l'espèce devant être reproduite sur le porte-greffe (1) s'effectue par inoculation ou par des systèmes d'amélioration connus.

3. Procédé de production d'arbres fruitiers selon la revendication
1, **caractérisé en ce que**, sur la branche charpentière horizontale (3a) d'une plante à croissance moins rapide ou sur une plante greffée sur un porte-greffe (1) à croissance lente, on élèvera moins de quatre rameaux verticaux (4, 5) à une distance égale les uns des autres.

4. Procédé de production d'arbres fruitiers selon la revendication
1, **caractérisé en ce que**, sur la branche charpentière horizontale (3a) d'une plante à croissante rapide ou sur une plante greffée sur un porte-greffe (1) à croissance rapide, on élèvera plus de quatre rameaux verticaux (4, 5) à une distance égale les uns des autres.
